Europäisches Patentamt

European Patent Office

Office européen des brevets

(11) Publication number: **0 047 995**
**B2**

(12) NEW EUROPEAN PATENT SPECIFICATION

(45) Date of publication of the new patent specification: **08.08.90**

(21) Application number: **81107183.6**

(22) Date of filing: **11.09.81**

(51) Int. Cl.⁵: **H 04 N 9/465**

(54) Circuit for processing color television signal of PAL system.

(30) Priority: **11.09.80 JP 127584/80**

(43) Date of publication of application:
**24.03.82 Bulletin 82/12**

(45) Publication of the grant of the patent:
**29.07.87 Bulletin 87/31**

(45) Mention of the opposition decision:
**08.08.90 Bulletin 90/32**

(84) Designated Contracting States:
**CH DE GB LI NL**

(56) References cited:
**GB-A-1 212 710**
**GB-A-2 008 347**
**US-A-4 133 002**

(73) Proprietor: **SANYO ELECTRIC CO., LTD.**
**18, Keihanhondori 2-chome**
**Moriguchi-shi Osaka-fu (JP)**

(72) Inventor: **Hosoya, Nobukazu**
**580-7, Hidehara Heguri-cho**
**Ikoma-gun Nara-ken (JP)**

(74) Representative: **Glawe, Delfs, Moll & Partner**
**Patentanwälte**
**Postfach 26 01 62 Liebherrstrasse 20**
**D-8000 München 26 (DE)**

## Description

The present invention relates to a color process circuit for processing a PAL color television signal including a subcarrier suppressed color signal wherein a subcarrier is quadrature modulated by two color component signals, one of the modulation axes being 180° reversed for every second line, and a burst signal the phase of which is swung in synchronism with the reversion of said one modulation axis, comprising:

demodulator means for demodulating said PAL color television signal,

said demodulator means including an R—Y demodulator, a B—Y demodulator and a G—Y demodulator;

PAL switch means for switching the phase of said color signal or a subcarrier for each horizontal period for supplying the switched output to said demodulator means;

phase locked loop type color synchronizing circuit means

said phase locked loop type color synchronizing circuit means including

voltage controlled oscillator means responsive to a given control voltage for generation a subcarrier at the frequency associated with said given control voltage, the output of said voltage controlled oscillator being supplied to said demodulator means as said subcarrier, and

control voltage generating means for comparing the phases of the subcarrier output of said voltage controlled oscillator means and said color burst for supplying a control voltage to said voltage controlled oscillator means;

phase detecting means for detecting the phase of the output of said PAL switch means;

said phase detecting means including means for withdrawing a first state output when the phase of the output of said PAL switch means is a normal phase, and

means for withdrawing a second state output when the phase of the output of said PAL switch means is not a normal phase;

said phase locked loop type color synchronizing circuit means being adapted to be locked responsive to the output of said phase detecting means;

forcedly reversing means for forcedly reversing the switching operation of said PAL switch means when said phase locked loop type color synchronizing circuit means is not in a locked state; and

forcedly changing means responsive to said second state output obtained from said phase detecting means for forcedly changing the control voltage being applied to said voltage controlled oscillator means,

said forcedly reversing means being adapted to forcedly reverse the switching operation of said PAL switch, means when the control voltage is forcedly changed by means of said forcedly changing means.

Description of the prior art

As well known the PAL system employs an approach in which a color subcarrier wave suppressed color signal of a color subcarrier quadrature modulated with two color signals while the modulation axis of one of them reversed 180° for every second line and a color burst signal being swung between predetermined phases in synchronism with reversion of the one modulation axis are transmitted and the output of a color subcarrier wave generator is applied to two demodulators for demodulating the above described two color signals for the purpose of synchronous detection at receiver side. On that occasion, it is necessary that as for the demodulator for demodulating the color signal which is subjected to reversion of the demodulating axis, the subcarrier wave from the above described color subcarrier wave generator or a carried color signal from a so-called adder/subtractor circuit is reversed for every second line.

Accordingly, it has been a common practice to provide a switch for reversing the phase by 180° for every second line in a color subcarrier supply line or a carried color signal supply line in the above described demodulator and such a switch is usually referred to as "PAL switch". Furthermore, such color signal circuit requires an ID (identification) circuit for normalizing a reversing mode of the above described PAL switch. Otherwise, the PAL switch starts arbitrarily the reversing operation and causes either a state in which the modulation axis of the color signal being applied to the demodulator and the color subcarrier wave (demodulating axis) are the same phase or a state in which such axes are opposite and the polarities of the demodulated outputs are different between the former and the latter cases, which is not very justifiable.

A color process circuit of the above mentioned kind is known from UA—A—4 133 002.

A color process circuit as recited in the introductory paragraph is known from DE—C—19 50 017.

With view to this known circuit it is the object of the present invention to propose a color signal circuit for PAL color television for achieving such and ID function with a novel system.

According to the invention this object is solved by the features that in that

said phase detecting means comprises means responsive to the outputs of said R—Y demodulator and said G—Y demodulator for detecting the phase of the output of said PAL switch means, and that

said forcedly changing means comprises sawtooth waveform voltage generating means for generating a sawtooth waveform voltage having a predetermined slope rise and a predetermined slope fall, and

means for supplying said sawtooth waveform voltge from said sawtooth waveform voltage generating means in superimposition to said voltage controlled oscillator means as said control voltage.

Contrary to the circuit recited in the introductory paragraph the circuit of the invention has been adapted to detect the phase of the output of the PLL switch in response to the outputs from both the G—Y and R—Y demodulators. By using the outputs from two demodulators instead of using the output of only one demodulator the advantage is achieved that malfunction of the phase detecting means due to a noise component in the output from the modulators can be eliminated through a function of eliminating the same phase components (by the differential circuit). A further improvement resides in the fact that the VCO in the PLL type color synchronizing circuit as forcedly changed in response to the control voltage which has a sawtooth wave voltage of repetition superimposed at a predetermined period.

Therefore, according to the present invention, a novel color process circuit of a PAL color television signal is provided, in which an ID (identification) function of the PAL switch is achieved in a manner different from a conventional one.

In a preferred embodiment of the present invention, a color killer circuit for receiving the outputs of an R—Y demodulator and a G—Y demodulator of a color demodulator is employed for detecting whether the phase of the PAL switch and thus the switching operation of the PAL switch is proper. The phase locked loop type color synchronizing circuit comprises a sweeper circuit for changing forcedly, preferably with a sawtooth waveform voltage, the control voltage being applied to the voltage controlled oscillator. The color killer circuit provides a color killer signal when the switching of the PAL switch is not in a normal operation. In the case of a normal switching operation of the PAL switch, the color killer circuit provies a signal for disabiling the sweeper circuit. Accordingly, in the absence of the color burst, such as in the case of a monochrome television signal, a color killer signal to provided and a signal for disabling the sweeper circuit is not provided, whereby the phase locked loop type color synchronizing circuit is not locked. In the case of a color television signal and in the case where a switching operation of the PAL switch is normal, a color killer signal is not provided and the operation of the sweeper circuit is stopped. In the case of a color television signal and in the case where a switching operation of the PAL switch is not normal, a color killer signal is provided and the sweeper circuit is not stopped, whereby the phase locked loop type color synchronizing circuit is not locked. In the case where the phase locked loop type color sychronizing circuit is not locked, one or an odd multiple number of horizontal trigger pulses being applied to the PAL switch are rendered ineffective, whereby the switching mode of the PAL switch is reversed to the previous switching mode. When the PAL color synchronizing circuit is locked, the sweeper circuit is stopped and ineffective-rendering of the trigger pulses by the PAL switch is also stopped, as described previously. Accordingly, in such a situation the PAL switch operates in a proper switching mode.

Conventionally, the ID function of the PAL switch was achieved by utilizing a separate circuit. Therefore, conventionally a circuit was required for sampling and holding a burst as an ID circuit, which made comlicated a circuit configuration. By contrst, the embodiment in discussion was structured to include an ID function in the APC circuit and the color killer circuit and therefore a separate circuit conventionally provided can be dispensed with and accordingly a circuit configuration is simplified.

The color amplifier for amplifying the PAL composite color siganl is provided with a variable resistor which is used for manual adjustment of the gain thereof. The color amplifier is responsive to the color signal from the color killer circuit to be disabled. A switch for extracting a trigger pulse is connected to a line (connected to the above described variable resistor) from the color amplifier. The switch is operable responsive to on/off of the transistor connected to the line. Since the embodiment in discussion is adapted such that the line of the variable resistor is used for gain adjustment of the color amplifier for the purpose of controlling a switch for rendering ineffective the trigger pulses, an advantage is brought about that the number of terminals can be decreased by one in the case where the circuit is implemented in an integrated circuit.

Accordingly, a principal object of the present invention is to provide a color process circuit for a PAL color television signal, in which an ID (identification) function associated with a PAL system is performed with a novel system.

One aspect to the present invention resides in a color process circuit adapted for locking a phase locked loop type color synchronizing circuit upon detection of the phase of the output of a PAL switch.

Another aspect of the present invention resides in a color process circuit for changing a switching mode of a PAL switch in the case where a phase locked loop type color synchronizing circuit is not locked.

These objects and other objects, features, aspects and advantages of the present invention will become more apparent from the following detailed description of the present invention when taken in conjuction with the accompanying drawings.

Brief description of the drawings

Fig. 1 is a block diagram of a color signal circuit for PAL color television;

Fig. 2 is a signal vector diagram at various points in the Fig. 1 diagram;

Fig. 3 is schematic diagram of a portion of the Fig. 1 diagram;

Fig. 4 is a view for explaining the operation of the Fig. 3 diagram;

Fig. 5 is a diagram showing a specific example of a portion of the Fig. 1 diagram;

Figs. 6, 7, 8, 9, 10, 11, 12, 13 and 14 are graphs for explaining the operation of the diagrams shown in Figs. 1 and 5;

Fig. 15 is a schematic diagram of a further portion of the Fig. 1 diagram;

Fig. 16 is a schematic diagram of still a further portion of the Fig. 1 diagram;

Fig. 17 is a schematic diagram of another embodiment corresponding to the Fig. 16 diagram;

Fig. 18 is a view for explaining the operation of the Fig. 1 diagram; and

Fig. 19 is a view for explaining the operation of the Fig. 15 diagram.

Description of the preferred embodiments

In the following the present invention will be described as embodied in a color process circuit of a PAL color television receiver; however, it is pointed out that the present invention can be also applicable to a video disc apparatus and other types of color video reproducing apparatuses.

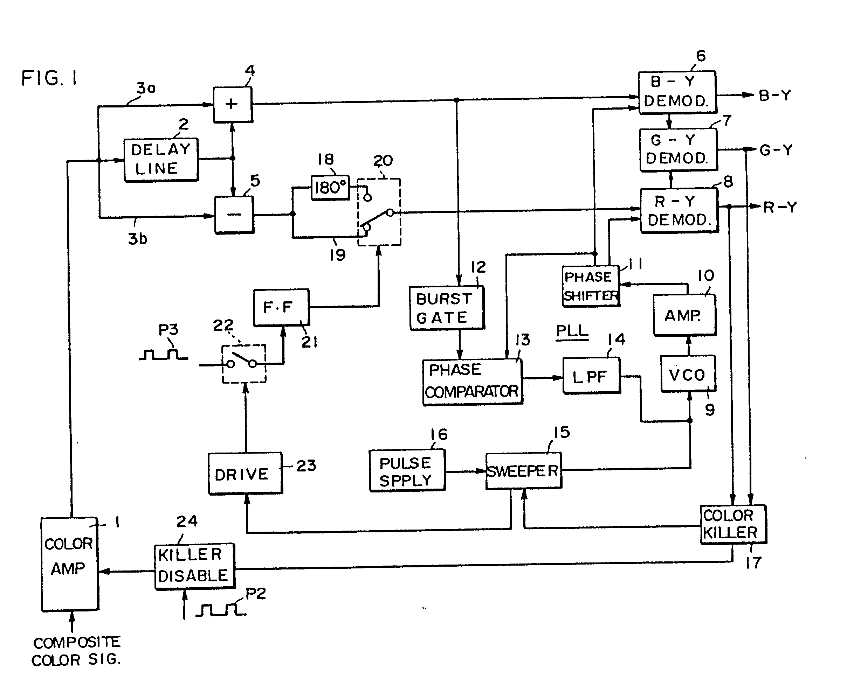

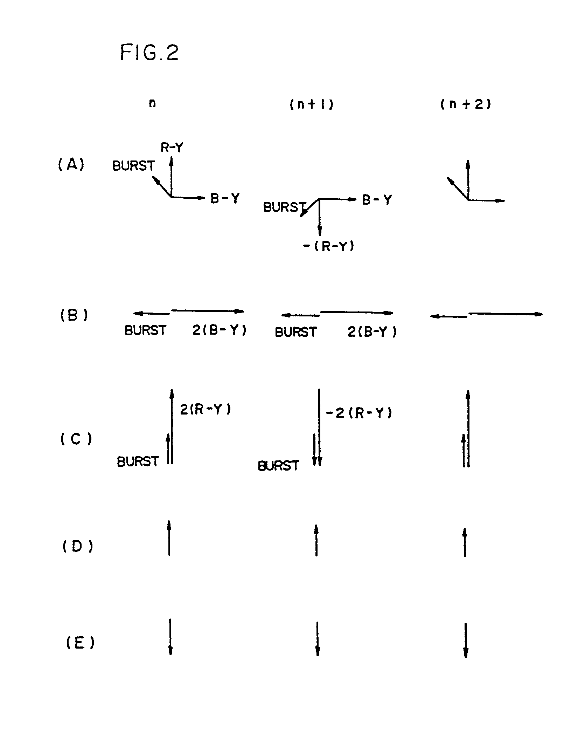

Referring to Fig. 1, the reference numeral 1 denotes a color amplifier for amplifying a composite color signal (including a carried color signal and a color burst) obtained through a bandpass circuit, which color amplifier usually comprises a gain adjusting means or an automatic gain varying function responsive to an automatic color control (often simply referred to as "ACC") signal. The reference numeral 2 denotes a 1H (one horizontal period) delay line, the reference numeral 4 denotes an adder for adding a delayed composite color signal delayed by 1H by means of the above described 1H delay line 2 and a non-delayed composite color signal provided through a straight line 3a, and the reference numeral 5 denotes a subtractor for making subtraction between the delayed composite color signal delayed by 1H by means of the above described 1H delayed line 2 and the non-delayed composite color signal obtained through the straight line 3b. Assuming that the composite color signal is in a relation shown as (A) in Fig. 2, for example, the output of the adder 4 is as shown as (B) in Fig. 2 and the output of the subtractor is as shown as (C) in Fig. 2. The reference numerals 6, 7 and 8 denote a B—Y demodulator, a G—Y demodulator, and an R—Y demodulator, respectively. The reference numeral 9 denotes a voltage controlled oscillator for generating a color subcarrier wave of 4.433618 MHz and the output thereof is supplied through an amplifying circuit 10 and a phase shifter 11 to the B—Y demodulator 6 and the R—Y demodulator 8, with a predetermined phase difference (generally a difference of 90°) therebetween and is also applied to a phase comparator 13 of a phase locked loop type color synchronizing loop. The phase comparator 13 compares the phases a color burst of a predetermined phase extracted from the output (shown as (B) in Fig. 2) of the above described adder 4 by means of a color burst gate 12, and the above described color subcarrier wave and the output from the phase comparator 13 is applied through a low pass filter 14 to the voltage controlled oscillator 9 as a control voltage. The reference numeral 15 denotes a sweeper circuit provided for assuring color synchronization by the output of the above described phase comparator 13 and is adapted to provide a stepwise sweep voltage waveform. The reference numeral 16 denotes a means for providing a pulse voltage of a predetermined frequency (for example a repetition frequency of the color burst

$$\frac{f_H}{32}$$

in the case where the horizontal frequency is $f_H$) for making stepwise the output of the above described sweeper circuit 15. The reference numeral 17 denotes a color killer circuit responsive to the G—Y demodulator 7 and the output of the R—Y demodulator 8 during the color burst period for disabling a function of the color amplifier 1 on the occasion of reception of monochrome broadcasting or on the occasion of abnormal reception of color broadcasting. The output of the color killer circuit 17 is simultaneously applied to the sweeper circuit 15 to disable the sweeper circuit 15 on the occasion of normal reception (such as in proper color synchronization) of the color broadcasting and otherwise to enable the same. Accordingly, as to be described subsequently the color killer circuit 17 serves to detect abnormalities of the outputs from the R—Y demodulator and the G—Y demodulator in the case where the switching operation of the PAL switch is not normal, and to the control the operation, of the phase locked loop type color synchronizing circuit upon detection of a normal output of the respective demodulators 7 and 8 in the case where the switching operation of the PAL switch is normal. The reference numeral 24 denotes a killer ineffective rendering means for preventing the color amplifer 1 from being stopped during at least the color burst period even when the color amplifier 1 is to be stopped by rendering ineffective the killer output being applied to the color amplifier 1 during the horizontal blanking period including the color burst period or the color burst as a function of the pulses P2. The reference numeral 20 denotes a PAL switch structured to alternately for each 1H the output of the subtractor 5 through the phase shifter 18 or through the direct path 19 so that the same may be applied to the R—Y demodulator 8 and the PAL switch makes a switching operation responsive to the output of a flip-flop 21. The flip-flop 21 is driven responsive to the trigger pulses P3 of the horizontal frequency and the trigger pulses P3 are applied through the switch 22 to the flip-flop 21. The switch 22 is in an on state on the occasion of normal reception but is once turned off during a predetermined time period in the case where the above described phase locked loop type color synchronizing circuit is not locked, whereby the trigger pulses are rendered ineffective by one. Such driving of the switch 22 is performed by an extracting driving means 23 coupled to a sweeper circuit 15. In the case where the phase locked loop type color synchronizing circuit is locked, the extracting driving circuit 23 is disabled and accordingly the switch 22 remains closed. Meanwhile, in the foregoing description it should be appreciated that when the trigger pulses P3 are rendered ineffective by one by means of the switch 22 the reversing operation of the flip-flop 21 and thus the switching mode of the PAL switch 20 is reversed to that so far assumed.

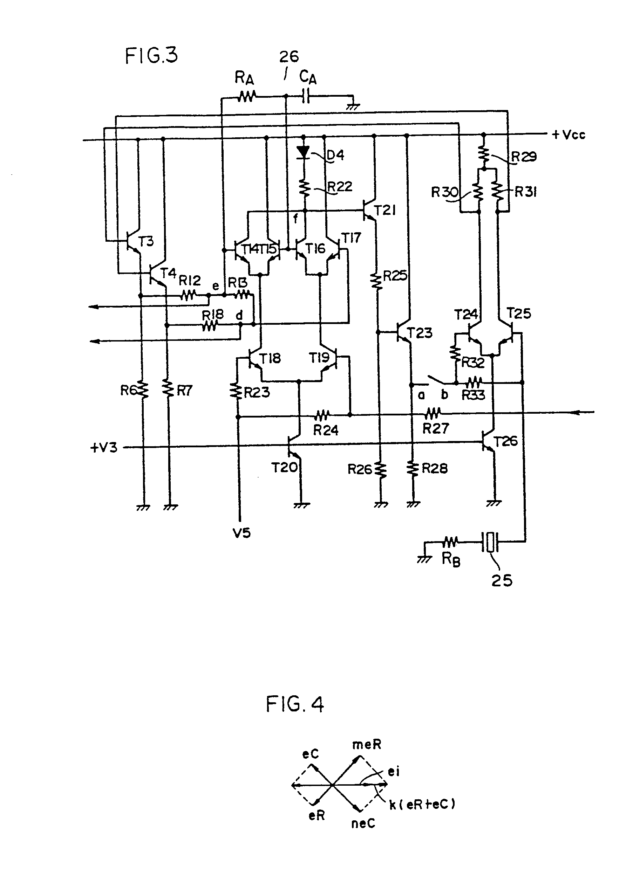

The operation of the Fig. 1 diagram will be described with reference to a specific example shown in Fig. 3 et seq. Referring to Fig. 3 showing the above described voltage controlled oscillator 9, assuming that the points (a) and (b) of the oscillation loop are opened and a signal ei is applied from the point (b), an operation in such situation is considered. First, a vibrator 25 including $LiTO_3$ as a base material (hereinafter referred to as a LiTa vibrator) comes to show the zero impedance at the resonance frequency (4.433618 MHz) and therefore the base of one transistor T25 constituting a differential pair is supplied with the following voltage.

$$\frac{R_B}{R_B+R33} \, ei$$

Since the base of the other transistor T24 of the differential pair is supplied with the voltage ei directly, the differential pair transistors T24 and T25 amplify the following difference voltage:

$$(1 - \frac{R_B}{R_B + R33}) \, ei$$

Now assuming that the collector ouputs of the differential pair transistors T24 and T25 are e24 and e25, respectively, the phases of the collector outputs e24 and e25 are different by 180°. The outputs e24 and e25 are applied to the emitter follower transistors T3 and T4, respectively; however, since the resistors R12, R13 and R18 have been selected to satisfy the relation of R12+R13=R18, no signal remains at the point (d) and no signal is applied to the transistor T17. The voltage e24 is applied through the emitter follower transistor T3 and through the point (e) to the phase shifting circuit 26 constituted by a resistor $R_A$ and a capacitor $C_A$. Assuming that the signal voltages being applied acorss the resistor $R_A$ and the capacitor $C_A$ are eR and eC, respectively, the voltages eR and eC have a phase difference of 90° in the case where the impedances of the resistor $R_A$ and the capacitor $C_A$ are equal to each other. The voltages eR and eC are applied to the differential pair transistors T14 and T15; and T16 an T17. The signals MeR and neC (m and n are constants) inverted by 180° by means of the differential pair transistors T14 and T15; and T16 and T17 are added at the point (f) to produce k(eR+eC) (k is a constant), which is obtained through the emitter follower transistors T21 and T23 from the point (a). By short-circuiting the points (a) and (b), the above described output is added to the voltage ei at the point (b) to perform the same operation to make oscillation. Fig. 4 shows a vector diagram in such a case.

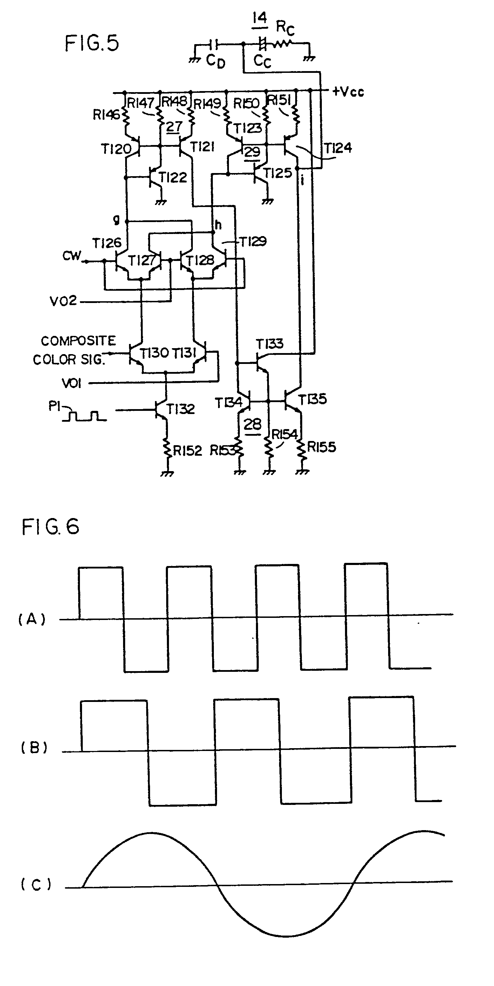

Fig. 5 shows a phase comparator 13 and a burst gate 12. These circuits are formed together as a double balance type differential circuit, in which the base of one transistor T131 of the lower stage differential pair transistors T130 and T131 is biased in a fixed manner by the voltage VO1, while the base of the other transistor T130 is supplied with the composite color signal from the color amplifier 1. The constant current source transistor T132 is supplied with the burst gate pulse P1 at the base thereof, whereby the same is redered conductive only during the burst gate pulse period and only the color burst is extracted from the above desribed composite color signal to provide the same at the collectors of the lower stage differential pair transistors T130 and T131, which is supplied to the emitters of the upper stage differential pair transistors T126 and T127; and T128 and T129. The bases of the transistors T127 and T128 out of the upper stage differential pair transistors T126 and T127; and T128 and T129 are supplied with a fixed bias VO2, while the bases of the transistors T126 and T129 are supplied with the color subcarrier wave CW from the above described voltage controlled oscillator 9, whereby phase comparison of the color burst and the color subcarrier wave are made by way of multiplication. As a result, the first output appears at the point (g) where the collectors of the transistors T126 and T128 are commonly connected and the second output appears at the point (h) where the collectors of the transistors T127 and T129 are commonly connected. The first and second outputs are of opposite phases to each other and the first output appears at the point (i) as the colletor output of the transistor T135 from the current mirror circuit 28 implemented by the transistors T133, T134 and T135 and the resistors R153, R154 and R155 through the current mirror circuit 27 implemented by the transistors T120, T121 and T122 and the resistors R146, R147 and R148. On the other hand, the second output is obtained at the point (i) as the output of the transistor T124 through the current mirror circuit 29 implemented by the transistors T123, T124 and T125 and the resistors R149, R150 and R151.

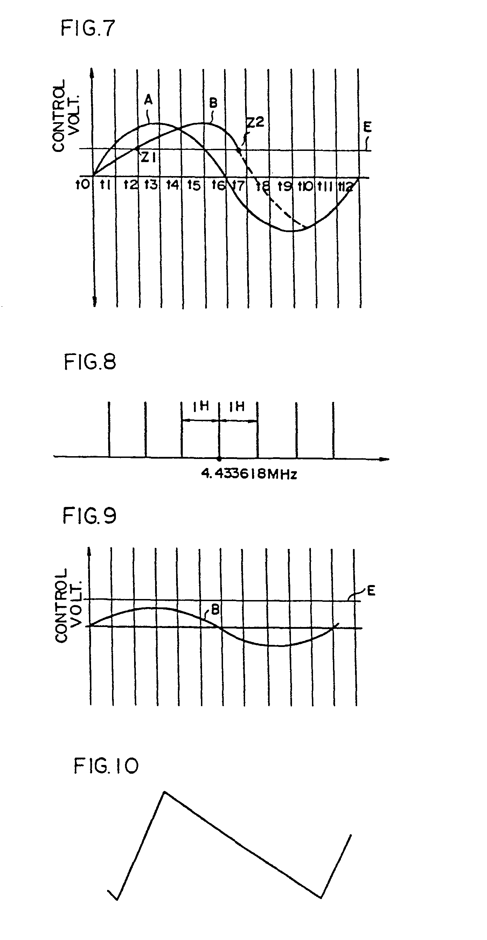

Fig. 6 shows the switching operation of the transistor responsive to the color burst and the color subcarrier wave CW and the output waveform based on the above described switching operation and in particular shows a signal of a beat frequency, i.e. a phase comparison output appearing as (C) in Fig. 6, by taking an example in the case where the color subcarrier wave CW shown as (B) in Fig. 6 as shifted by

$$-\frac{1}{2} f_H$$

with respect to the color burst shown as (A) in Fig. 6. The output signal is supplied from the point (i) through a low pass filter 14 formed as a dual time constant circuit (a high frequency filter is formed with the resistor R152 and the capacitor $C_D$ and a low frequency filter is formed with the resistor R152 and the capacitor $C_C$ in Fig. 5) to the above described voltage controlled oscillator 9 as a control voltage. Referring to Fig. 7, the abscissa indicates the time and the ordinate indicates the above described control voltage and the curve A merely shows the output of the above described phase comparator 13 in the case where the phase locked loop is not rendered effective, i.e. in the case where the automatic color synchronization is not rendered effective. Now considering a case where automatic color synchonization is rendered effective, since the control voltage is positive during a period of t0—t6, the oscillation frequency of the voltage controlled oscillator 9 becomes lower and the beat frequency also becomes lower, whereas since the control voltage is negative during a period of t6—t12, the beat frequency becomes higher as shown by the curve B in Fig. 7. The curve B crosses the potential E for making stable oscillation of 4.433618 MHz at two points Z1 and Z2; however, at the point Z1 the operation is in a direction for decreasing the oscillation frequency and hence is in the direction away from the stable point and therefore a beat signal is futher continually generated. At the point Z2 the operation is in the direction for increasing the oscillation frequency to be close to the stable point of 4.433618 MHz and therefore the voltage controlled oscillator 9 becomes stabilized when the point Z2 is reached and thereafter no beat signal is generated.

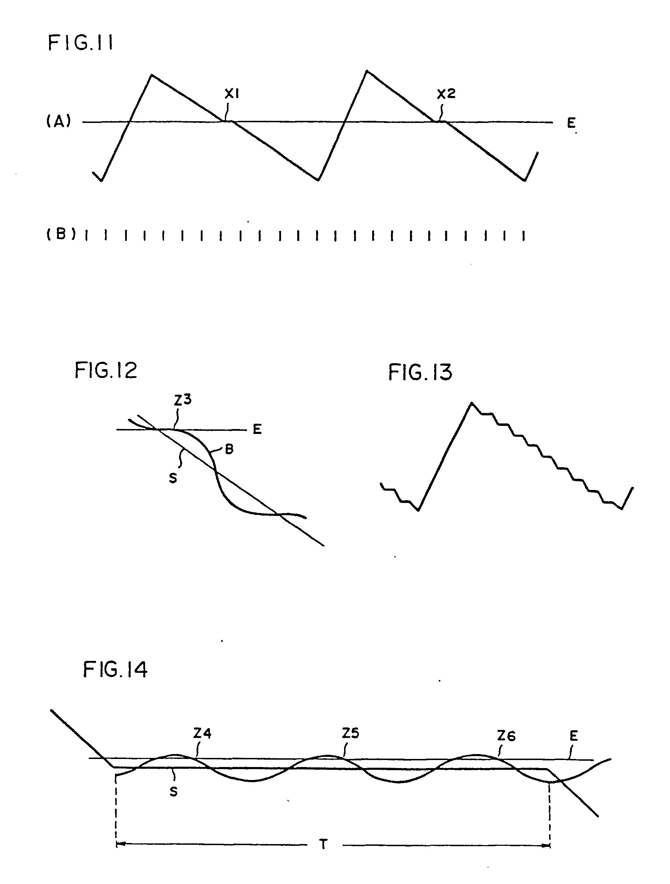

Meanwhile, as described previously, the embodiment employs an LiTa vibrator 25 as a virbrator of the voltage controlled oscillator 9. Employment of such LiTa vibrator brings about an advantage of extreme inexpensiveness of a vibrator as compared with the case where a quartz vibrator is emloyed and further brings about another merit set forth in the following. However, the frequency variable range as a function of the control voltage of the voltage controlled oscillator employing the LiTa vibrator is as broad as approximately ± 7 kHz due to the small quality factor of the LiTa vibrator 25 and is approximately ten times as compared with the frequency variable range of the conventional voltage controlled oscillator employing a quartz vibrator being approximately ±700 Hz. When the frequency spectrum of the color burst is diagrammatically shown, the frequency distribution appears at 1H interval with 4.433618 MHz as the center, as shown in Fig. 8. In such frequency distribution, only the frequency of 4.433618 MHz is necessary and, since there are intervals of ±1 H from 4.433618 MHz to the adjacent frequency component, even in the case in the voltage controlled oscillator employing the LiTa vibrator the color synchronizing circuit will not make malfunction responsive to the adjacent frequency component. However, the frequency variable range of the voltage controlled oscillator employing the LiTa vibrator is approximately ten times, as described previously, as compared with a case where the quartz vibrator is employed and therefore a pull-in range of the phase locked loop employing the voltage controlled oscillator employing the LiTa vibrator is also approximately ten times. In the case of a broad frequency pull-in range, a problem is involved that an anti-noise characteristic on the occasion of a weak electric field intensity is degraded (on the occasion of a weak electric field intensity generally a noise becomes conspicuous and this nose could make the apparatus operable). Therefore, by paying an attention to the fact that the oscillation frequency variable range of the voltage controlled oscillator is proportional to the amplitude of the beat signal being generated at the output of the phase comparator 13, the embodiment is adapted such that the beat signal is applied to the low pass filter 14 formed as a dual time constant circuit shown in Fig. 5 to full attenuation (say 1/10) whereby a frequency pull-in range is made narrow, thereby to improve an anti-noise characteristic on the occasion of a weak electric field intensity to be commensurate with that in case where a quartz vibrator is employed. Incidentally described, the resistor $R_C$ of the low pass filter 14 is 390Ω, the capacitor $C_C$ is 4.7 µF, the capacitor $C_D$ is 10000 pF, and the resistor R152 is 500Ω. Meanwhile, since the beat signal amplitude was thus decreased, a problem is caused that the phase locked loop does not reach the stabilized potential E of 4.433618 MHz by the beat signal B as shown in Fig. 9 and accordingly the phase locked loop is not locked to 4.433618 MHz; however in order to solve such a problem, the embodiment shown employs a sweeper circuit 15 so that the above described beat signal is superimposed on the sweep voltage, whereby the beat signal is made to reach the stable potential of 4.433618 MHz, thereby to lock the phase locked loop. On that occasion, the sweep voltage waveform is selected to be not a mere sawtooth waveform but to be a stepwise waveform to be described subsquently. No problem is involved even with a sawtooth waveform, if the phase locked loop is locked by applying a continuous waveform as a reference signal; however, in the case where automatic color synchronization is to be achieved by using such an intermittent signal as a color burst as a reference signal, phase locked loop type color synchronization is not locked even when the sweep voltage waveform is superimposed. The above described stepwise waveform is aimed to eliminate such incovenience. For example, considering a case of a phase locked loop in which an intermitttent signal as shown as (B) in Fig. 11 is used as a reference signal, when a mere sawtooth waveform voltage is used as a sweep voltage being superimposed as shown in Fig. 10, a locking operation is about to be made to the stable potential E at the point X1 shown as (A) in Fig. 11 but, since the information as a reference signal is intermittent, the phase compared output of the phase locked loop is not enough and a lock operation is not performed and thus even at the following point X2 of the fall of the sawtooth waveform likewise a lock operation is not performed. Meanwhile, a lock operation does not take place at the rise of the sawtooth waveform, not particularly shown, inasmuch as the same is steep, as is needless to say. In the case of a phase locked loop in which not an intermittent signal but a continuous signal is employed as a reference signal, the detected output and thus the control output is enough but even in such a case superimposition of a mere sawtooth waveform voltage still involves a problem that a lock operation is still difficult. The reason is that even when the control voltage reaches a stable potential E at the point Z3 as shown in Fig. 12 there is a high possibility that a lock operation is not performed since the sweep voltage S has decreased.

By contrast, since the embodiment shown employs a sweep voltage waveform of a stepwise waveform as shown in Fig. 13 (since only the fall is used in the embodiment a stepwise waveform at the fall portion is sufficient), the sweep voltage does not decrease at every T period as shown in Fig. 14 and therefore at the T period close to the stable potential E the comparison output (the beat signal between the color burst and the color subcarrier wave) from the phase comparator 13 crosses the stable potential E several times as shown in Fig. 14, whereby chances of being locked are met at the points Z4, Z5 and Z6. In addition, since the above described T period is selected to be long (as long as sixteen times the horizontal period) in actuality, the color burst of the intermittent signal is utilized for a plurality of lines (16 H) in the T period and a control signal of an ample one is obtained irrespective of the time constant of the low pass filter 14, with the result that a lock operation to the stable potential E is assured.

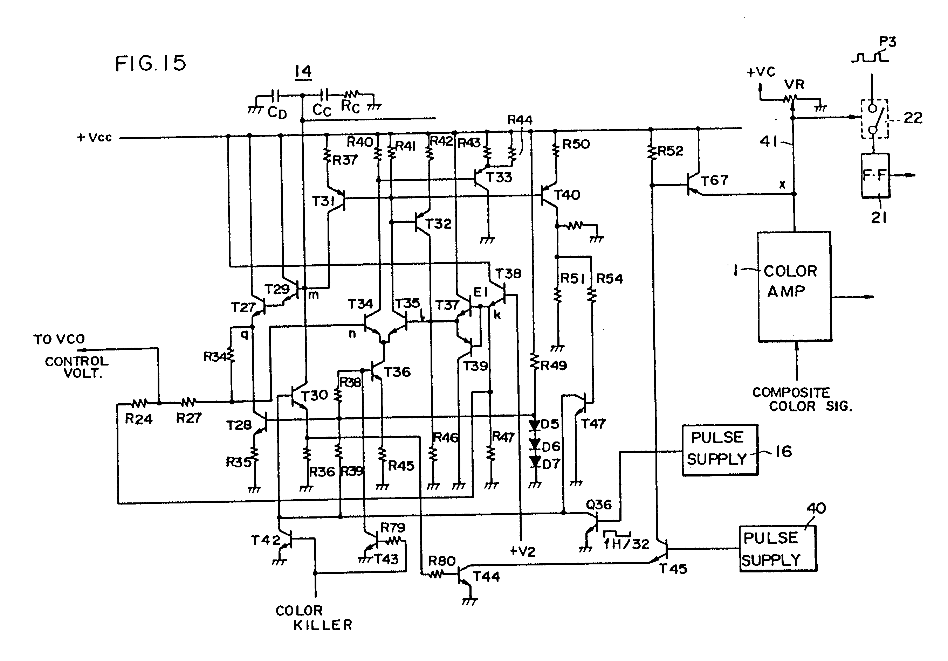

Now the sweeper circuit 15 will be described with reference to the embodiment shown in Fig. 15. Referring to Fig. 15, in the case where the capacitor $C_C$ of the low pass filter 14 (the filter is also shown in Fig. 5) has not been charged, assuming that the potential at the point (k) is E1, the potential at the point (l) becomes E1—Vf, where Vf is the base/emitter voltage on the occasion of conduction of the transistor. Since the capacitor $C_C$ has not been charged, the potential at the point (m) is 0 and the transistors T27 and T29 are placed on a cutoff state. The current flows through the path of the point (k)→the resistor R24→the resistor R27→the resistor R34→the transistor T28→the resistor R35→the ground and the current is determined by the diodes D5, D6 and D7, the transistor T28 and the resistor R35 is given as

$$i = \frac{2Vf}{R35}.$$

Therefore, the potential at the point (n) is expressed by the following equation.

$$E2 = E1 - i(R24 + R27)$$

$$= E1 \frac{2Vf}{R35}(R24 + R27)$$

Therefore, the circuit is designed so that E2<E1—Vf may be in advance met. Since E2<E1—Vf the differential pair transistors T34 and T35 are brought in such a state in which the transistor T34 is turned off and the transistor T35 is turned on. When the transistor T35 is turned on, a current flows through the resistor R41, to cause a voltage drop thereacross, whereby the transistors T31, T32 and T40 are turned on. When the transistor T40 is turned on, a current flows through the transistor T40 and a base current is supplied to the transistor T47, whereby the transistor T47 is placed in an on state and the collector potential of the transistor T47 becomes 0V, by neglecting the resistance between the collector and the emitter thereof. Therefore, no base current flows to the transistor T30 and the transistor T30 is cut off. Since the transitor T31 has been placed in an ion state as described prevously, a charging current flows to the capacitor $C_C$ through the pont (m). Since the transistor T30 has been placed in a cutoff state as described previously, the above described current does not flow through the transistor T30. As the capacitor $C_C$ is charged, the potential at the point (m) increases, whereby the potential at the point (n) accordingly increases. Since the transistor T32 as well as the above described transistors T31 and T40 are in an on state, a potential difference occurring across the resistor R46 increases and the potential at the point (l) also increases; however, the voltage E1 is exceeded, the transistor T37 is turned off and instead the transistor T39 is turned on and accordingly the potential at the point (l) is clamped to the value of E1+Vf. When the potential at the point (n) becomes higher than the potential at the point (l), the differential pair transistors T34 and T35 are operated such that the transistor T34 is turned on and the transistor T35 is turned off. When the transistor T34 is turned on, the transistors T31, T32 and T40 are turned off. When the transistor T31 is turned off, a charging current comes not to flow to the capacitor $C_C$ and the capacitor $C_C$ in not charged, with the result that the capacitor $C_C$ starts discharging. Since the transistor T40 is turned off, the transistor T47 comes not to be supplied with a base current, whereby the transistor T47 is turned off. Therefore, a bias is applied to the base of the transistor T30 through the resistor R39 and the electric charge in the capacitor $C_C$ is discharged through the path of the point (m)→the transistor T30→the resistor R36. Since the transistor T32 is turned off, the potential at the point (l) decreases up to E1—Vf. In the foregoing description, when the differential pair transistor T34 is turned on, the transistor T33 is turned on a current flows from the voltage source +Vcc through the resistors R43 and R44 and the transistor T33 to the ground. This is aimed to cause a current of the same amount to flow on the occasion of charging of the capacitor $C_c$ as that of the current that flowed through the route of the voltage source +Vcc→the resistor R37→the transistor T31→the point (m)→the capacitor $C_c$, thereby to prevent a ripple from being superimposed. When the capacitor $C_c$ is discharged and the potential at the point (n) becomes lower than the potential at the point (l), the above described charging and discharging operations are repeated.

Insofar as the foregoing description is concerned, the sweep voltage is a mere sawtooth waveform as shown in Fig. 10; however, the base of the transistor Q36 is supplied with a pulse of the frequency of

$$\frac{f_H}{32}$$

from the pulse supply means 16 (Fig. 1) during the fall of the above described sweep waveform and therefore the transistor Q36 is turned on/off, whereby the transistor T30 is turned off/on and the potential at the point (m) and the potential at the point (q) become a stepwise waveform during the fall period, as shown Fig. 13. More specifically, during the low level of the pulse from the pulse supply means 16 the transistor Q36 is turned off and therefore the transistor T30 is placed in an on state (because the base bias being applied through the path of the voltage source +Vcc→the resistor R49→the resistor R39→the transistor T30 is not rendered ineffective) and the electric charge in the capacitor $C_c$ is discharged through the collector and emitter of the transistor T30 and the resistor R36, whereby the potentials at the points (m) and (q) decrease. During the high level of the above described pulse of

$$\frac{f_H}{32}$$

the transistor Q36 is turned on and the base bias of the transistor T30 is rendered ineffective and is brought to 0V, whereby a discharging operation of the capacitor $C_c$ through the transistor T30 is brought to a stop, stopping a decrease of the potentials at the points (m) and (q). Meanwhile, the period of the sweep voltage waveform is selected such that the period is 500—600 times of the horizontal period, as an example. The color killer circuit 17 produces a color killer signal responsive to the output during the color burst period of the R—Y demodulator 8 and the B—Y demodulator 7 as shown in Fig. 1.

In the foregoing the case where the fall of a sawtooth waveform voltage is stepwise was described. However, a modification of the same concept would be obvious to those skilled in the art, in which the rise of a sawtooth waveform is stepwise.

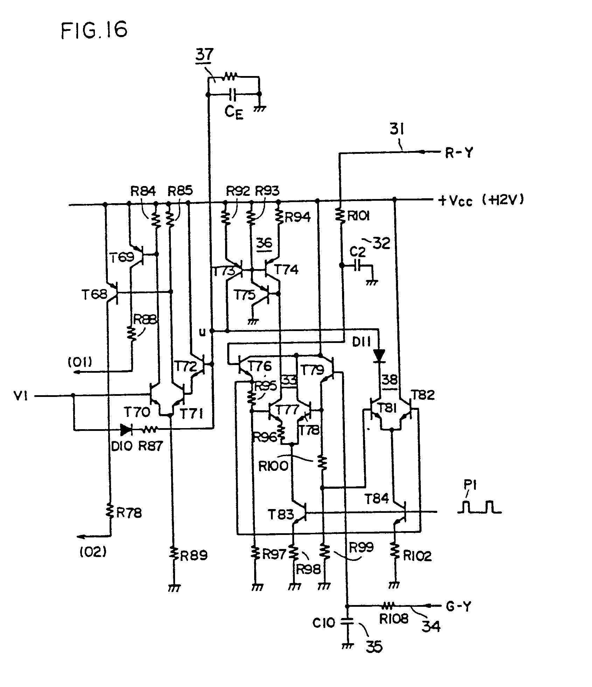

Referring to the color killer circuit shown in Fig. 16, the output of the R—Y demodulator is applied from the line 31 to the base of the emitter follower transistor T76 through the low pass filter 32 including the resistor R101 and the capacitor C2 and is applied to the base of the transistor T77 forming the differential pair for the comparator 33 through the resistor R95 at the emitter side of the transistor T76. On the other hand, the output of the G—Y demodulator is applied from the line 34 to the base of the emitter follower transistor T79 through the low pass filter 35 including the resistor R108 and the capacitor C10 and is directly applied to the base of the other transistor T78 constituting the above described comparator 33 from the emitter of the transistor T79. The R—Y channel and the G—Y channel have been set in the same conditions, for example, the direct current biases from the demodulator applied to the lines 31 and 34 are the same and the resistors R101 and R1108 and the capacitors C2 and C10 have been selected to be the same values, respectively, and so on; however the output of the R—Y demodulator is applied through the resistor R95 to the comparator 33 so that the output being applied is made small by a voltage drop across the resistor R95 as compared with the output of the G—Y demodulator. The said voltage drop is approximately 0.3V. The output of the above described comparator 33 is applied to the integrating circuit 37 through the current mirror circuit 36 formed with the transistors T73, T74 and T75 and the resitors R92, R93 and R94 and is smoothed by the integrating circuit 37. The thus smoothed output is applied to the differential pair transistors T70 and T71 through the emitter follower transistor T72 (as regards the supplied bias thereto, the fixed potential V1 is directly applied to the base of the transistor T70 and is applied through the diode D10, the resistor R87, the base/emitter of the transistor T72 to the base of the transistor T71) and is further applied from the collector of the emitter grounded transistor T69 to the color amplifier 1 shown in Fig. 1 and on the other hand is supplied from the collector of the emitter grounded transistor T68 to the bases of the above described transistors T42 and T43 of the sweeper circuit 15. The above described comparator 33 is operable only during the period of the burst gate pulse PA applied to the base of the constant current source transistor T83 and is otherwise inoperable. Therefore, the output portion other than the color burst period out of the output from the R—Y demodulator and the output from the G—Y demodulator obtained from the lines 31 and 34 does not affect at all the color killer operation.

Referring to Fig. 16, considering a case in the absence of the color burst such as on the occasion of reception of the monochrome broadcasting, the base potentials of the differential pair transistors T77 and T78 of the comparator 33 have been selected in advance such that the base potential of the transistor T78 is higher and therefore the transistor T78 has been turned off and the transistor T78 has been turned on. Therefore, no current flows through the current mirror circuit 36 and the capacitor $C_E$ of the integrating circuit 37 has not been charged and the potential at the point (u) does not increase. Therefore, the differential pair transistors T70 and T71 at the output side are operated such that the transistor T70 is turned on and the transistor T71 is turned off. The transistor T69 is turned on responsive to the on state of the above described transistor T70 and the high level voltage is developed at the first output point O1 for stopping the color amplifier 1. However, the signal at the first output point O1 is applied through the color ineffective rendering means 24 and therefore does not stop the color amplifier 1 at least during the color burst period. On the other hand, the transistor T68 is turned off responsive to the off state of the transistor T71 and no voltage is generated at the second output point O2 for stopping the sweeper circuit 15 and accordingly the sweeper circuit 15 is placed in an enabled state.

Now considering a case in the presence of the color burst and in the case of a normal reception state (the PAL swith 20 being also normal), the color burst supplied from the subtractor 5 to the R—Y demodulator 8 is of the same phase as that of the dmodulation axis of the R—Y demodulator, as shown as (D) in Fig. 2 and therefore the color burst demodulated output of the R—Y demodulator 8 is a positive voltage, whereby a potential at the line 31 increases and accordingly the base current of the transistor T77 also increases more than a predetermined value. On the other hand, the G—Y demodulator 7 receives the demodulated outputs from the R—Y demodulator and the B—Y demodulator to matrix the same, so that the same provides the demodulated outputs which are decreased to as small as approximately

$$\frac{3}{10}$$

as compared with the outputs of the R—Y demodulator and the B—Y demodulator; however, the color burst demodulated output of the R—Y demodulator is plus and the color burst demodulated output of the B—Y demodulator is minus on the occasion of the above described normal reception, so that the matrix output of the demodulated outputs of these demodulators 8 and 6 is approximately 0V and only a direct current bias is provided from the beginning from the output line of the G—Y demodulator through the line 34. In such situation, the states of the transistors T77 and T78 are reversed such that the transistor T77 is turned on and the transistor T78 is turned off. When the transistor T77 is turned on, a current flows through the current mirror circuit 36 and a current for charging the capacitor $C_E$ flows through the point (u) and therefore the potential at the point (u) increases. The base potential of the transistor T72 also increases as the potential at the point (u) increases and the differential pair transistor T70 is turned off while the transistor T71 is turned on. When the transistor T70 is turned off, no base current is supplied to the transistor T69 and the transistor T69 is turned off responsive to turning off of the transistor T70 and no voltage for stopping the operation of the color amplifier 1 is generated at the first output point O1. Therefore, the color amplifier 1 normally operates. On the other hand, the transistor T68 is turned on responsive to turning on of the transistor T71 and the high level generated at the second output point O2. Since the high level voltage is applied to the base of the transistors T42 and T43 of the sweeper circuit 15, the transistors T42 and T43 are turned on and the base potentials of the transistors T30 and T36 are clamped to the ground potential, whereby the transistor T30 is fixed to off and the differential pair T34 and T35 are disabled while the sweep operation of the sweeper circuit 15 is stopped.

However, on the occasion of color broadcasting reception and in the case not in normal reception (such as in the case where the switching operation of the PAL switch 20 is not normal), the color burst being applied to the R—Y demodulator 8 is of the polarity opposite to the demodulating axis of the R—Y demodulator 8, as shown as (E) in Fig. 2 and the color burst demodulated outpout of the R—Y demodulator 8 becomes minus and the output from the supply line 31 becomes small. Since the phase of the color burst supplied from the adder 4 to the B—Y demodulator 6 at that time remains unchanged, the color burst demodulated outpout of the B—Y demodulator 6 remains minus. Accordingly, since the plus color burst demodulated outputs are applied from the R—Y demodulator 8 and the B—Y demodulator 6 to the G—Y demodulator 7, the color burst demodulated output of the G—Y demodulator 7 is also provided in the plus direction, although a little. In such situation, the transistor T77 and T78 are operated such that the transistor T78 is turned on and the transistor T77 is turned off, whereby no current flows in the current mirror circuit 36 and the potential at the point (u) does not increase whereby the color amplifier 1 is stopped (although the same is not stopped by means of the color ineffective rendering means 24 during the color burst period), while the sweep circuit 15 starts a sweep operation, whereby the phase locked loop type color synchronizing circuit is not locked. The Fig. 16 color killer circuit comprises an auxiliary circuit 38 for promptly discharging the electric charge in the capacitor $C_E$ in the case where color synchronization is disturbed and the like for preventing a color noise from appearing on the screen and the auxiliary circuit 38 comprises differential pair transistors T81 and T82, a constant current source transistor T84 therefor an a resistor R102 and a reverse current preventing diode D11. The R—Y demodulated ouput and the G—Y demodulated output being applied to the auxiliary circuit 38 are applied in a relation of the level opposite to those applied to the above described comparator 33. More specificially, the output from the R—Y demodulator is supplied from the emitter of the emitter follower transistor T76 directly to the base of the transistor T82, while the output from the G—Y demodulator is supplied from the emitter of the emitter follower transistor T79 through the resistor R100 of the voltage drop of 0.3V to the base of the transistor T81 and therefore are in the relation opposite to the output of the demodulator being applied to the comparator 33. The base of the constant current source transistor T84 is supplied with a burst gate pulse commonly to the constant current source transistor T83 for the comparator 33 and accordingly the auxiliary circuit 38 also operates only during the color burst period. Since the base potential of the transistor T82 has been selected to be higher than the base potential of the transistor T81, the transistor T82 is turned on and the transistor T81 is turned off in the absence of the color burst and in the case where the reception state is normal even in the presence of the color burst, no influence is exerted upon the potential at the point (u). However, on the occasion of reception of the color broadcasting of a weak electric field intensity, for example, the phase of the color burst is liable to change at random. In the case of such disturbed color burst or the case where the switching mode of the PAL switch 20 is not normal, it could happen that the negative color burst demodulated output is obtained from the R—Y demodulator 8. In such a case the transistor T77 of the comparator 33 is turned off and the capacitor $C_E$ will not be charged; however, in the case where channel selection is made from a channel of a normal electric field intensity to a channel of weak electric field intensity or the case whre the PAL switch 20 becomes in an abnormal switching mode from a normal switching mode, an electric charge stored in the capacitor $C_E$ on the occasion of normal reception remains therein for the time being and during that time period a color noise is caused on the screen. However, in such a case by virtue of the operation of the above described auxiliary circuit 38 the electric charge in the capacitor $C_E$ is instantaneously discharged and therefore the color amplifier 1 is brought to a stop and a color noise on the screen immediately disappears. More specifically, the transistor T81 of the auxiliary circuit 38 is turned on and the electric charge in the capacitor $C_E$ is instantaneously discharged through the path of the capacitor $C_E$→the diode D11→the transistor T81→the constant current source transistor T84 and the resistor R102→the ground.

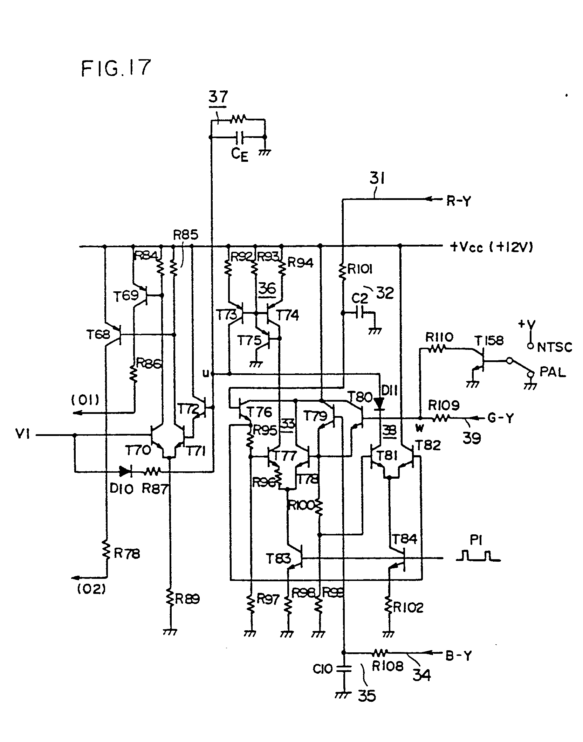

Fig. 17 shows a color killer circuit of another embodiment. The Fig. 17 embodiment is different from the Fig. 16 embodiment in that the line 34 is connected to the B—Y demodulator 6 and another transistor T80 is added in parallel with the transistor T79 and the G—Y demodulator 7 is connected through the line 39 to the base of the transistor T80. The Fig. 17 circuit is suited for a television receiver adapted to be receivable of NTSC broadcasting and PAL broadcasting. More specifically, on the occasion of reception of NTSC broadcasting the transistor T158 connected to the point (w) is turned on so that the base of the transistor T80 is brought to the potential of the ground, whereby the output of the G—Y demodulator is interrupted and the comparator 33 and the auxiliary circuit 38 are operable only responsive to the output of the R—Y demodulator and the output of the B—Y demodulator. On the occasion of reception of PAL broadcasting, the transistor T158 is turned off so that the output of the G—Y demodulator is utilized. Meanwhile, although no capacitor for a low pass filter is provided in the line 39, no problem is involved in the case of PAL. However, it is needless to say that a capacitor for a low pass filter may be provided.

In the case where the frequency and the phase of the color subcarrier wave generated by the voltage controlled oscillator 9 deviate to some extent as described previously, the transistors T42 and T43 are maintained in an off state by means of the color killer circuit 17 and therefore the sweeper circuit 15 performs a sweep operation described previously. On the other hand, in the case where the frequency and the phase of the color subcarrier wave are in a predetermined range, the transistors T42 and T43 are turned on and the sweeper circuit 15 is fixed to a stopped state, whereby the color synchronizing phase locked loop is locked.

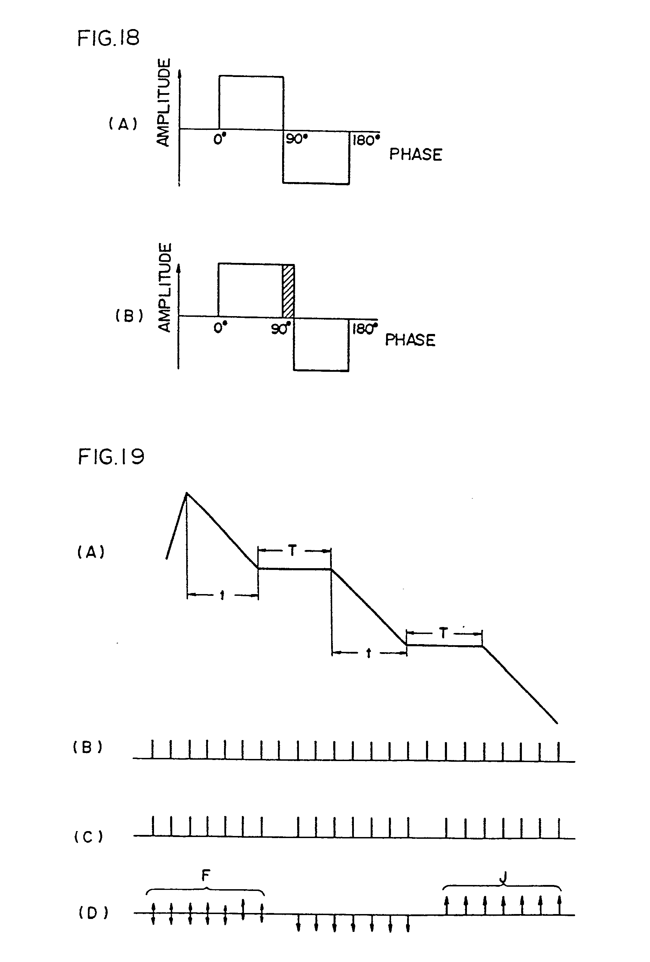

In the locked state the output of the phase comparator 13 becomes zero in terms of the direct current. This is shown in a current waveform as (A) in Fig. 18. After the color synchronizing phase locked loop is once locked, the frequency of a beat signal (a beat of the color subcarrier wave and the color burst) of the output from the phase comparator 13 is as low as being deemed as substantially a direct current and therefore the time constant of the low pass filter 30 becomes large and the input impedances of the emitter follower transistors T27 and T29 (Fig. 15) are also large and the gain of the phase comparator 13 becomes large. In such a locked state, a current flows by an amount (a hatched portion) associated with deviation of the phase and the frequency as shown as (B) in Fig. 18 and the voltage generated by the current is applied to the voltage controlled oscillator 9 (i.e. the base of the transistor T19 in Fig. 3). Referring to Fig. 18, the abscissa indicates the deviation amount of the color subcarrier wave and the ordinate indicates the output of the phase detector.

In the case where the switching operation of the PAL switch 20 is not normal, the sweeper circuit 15 continues a sweep operation by virtue of the color killer circuit 17 so that the phase locked loop type color synchronizing circuit is not locked, as described previously; however, without any means for returning the switching operation to a normal state, the PAL switch 20 will not turn to a normal switch operation. Such means is implemented by a switch 22 provided in a supply path of the trigger pulses P3 to the flip-flop 21 and an extracting driving means 23 for controlling the switch 22. In the case where the switching operation of the PAL switch 20 is normal, the color burst of each line is directed upward as shown as (D) in Fig. 2 (the same phase as the R—Y demodulating axis) but in the case where the switching operation of the PAL switch 20 is erroneous with same is directed downward as shown as (E) in Fig. 2. Therefore, when the phase locked loop type color synchronizing circuit has not been locked, one of the trigger pulses (shown as (B) in Fig. 19) is extracted during the time period T (shown as (A) in Fig. 19) of the stepwise sweep voltage in accordance with the emodiment. Accordingly, the trigger pulses are rendered ineffective by one for each said period T as shown as (C) in Fig. 19. When one of the trigger pulses is extracted, the switching mode of the PAL switch 20 is reversed to the switching mode of the PAL switch 20 assumed previously, as is readily understood. Therefore, the color burst demodulated output of the R—Y demodulator 8 becomes as shown as (D) in Fig. 19. The phase locked loop type color synchronizing circuit is locked at a portion directed upward. Referring to the curve (D) in Fig. 19, the portion F is a case where color synchronization is disturbed and therefore the color burst demodulated output of the R—Y demodulator 8 occurs both in the plus direction and the minus direction and in such a case the capacitor $C_E$ is not charged by the auxiliary circuit 38 in the color killer circuit 17 and therefore the sweep operation of the sweeper circuit 15 is not stopped, so that phase locked loop type color synchronizing circuit is not locked; however, the same is locked at the portion J of the curve (D) in Fig. 19. When color synchronizing circuit is once locked, the sweeper circuit 15 is stopped and the extracting driving means 23 is also stopped so that the switch 22 remains closed and the trigger pulses P3 are not extracted any more and accordingly the PAL switch 20 operates in a normal switching mode. Thus, the switching mode of the PAL switch 20 is set in a normal state.

Meanwhile, extraction of the trigger pules P3 may be executed not during a predetermined potential period T of the stepwise sweep voltage but instead in a fall period t of the sweep voltage as a matter of course and even in such a case color synchronizing circuit is locked during the predetermined potential period T. The Fig. 15 embodiment is adapted such that extraction of the trigger pulse P3 and hence forced reversion of the switching mode of the PAL switch 20 is executed during the fall period t.

Referring to Fig. 15, it was already described that the pulses of

$$\frac{f_H}{32}$$

are supplied from the pulse supply means 16 to the base of the transistor Q36 whereby the sweep voltage waveform becomes stepwise. The transistor T44 having the base connected through the resistor R80 to the emitter of the discharging transistor T30 is rendered conductive upon application of a base bias when the transistor T30 is turned on and accordingly during the fall period t of the sweep voltage. Accordingly, the emitter of the transistor T45 is connected to the ground and the transistor T45 is turned on or off depending on the state of the base thereof. On the other hand, the base thereof is supplied with one pulse from the second pulse supply means 40 during the above described period t so that the transistor T45 is turned on only during the pulse period. Accordingly the transistor T67 is also turned on and the potential at the point (x) increases up to +Vcc and the switch 22 is turned off, whereby the trigger pulses P3 are rendered ineffective by one. In the foregoing it is assumed that the pulse of the second pulse supply means 40 is of a pulse width enough to cover the above described one trigger pulse. During a time period other than the pulse period of the pulse from the second pulse supply means 40 the transistor T45 is turned off and accordingly the transistor T67 is turned off, so that the potential at the point (x) does not increase and the switch 22 is turned on. When the phase locked loop type color synchronizing circuit is locked, the high level is applied from the color killer circuit 17 to the bases of the transistors T42 and T43 and the transistors T30 and T36 are fixed to be off, whereby the base potential of the transistor T44 becomes 0 and the transistor T44 is fixed to be off. Therefore, irrespective of whether the pulse is supplied from the second pulse supply means 40 or not, the transistor T45 is brought to an off state and accordingly the switch 22 remains in an on state. Referring to Fig. 15, the transistor T67 and the switch 22 are connected to the line 41 of the variable resistor VR for manually adjusting the gain of the color amplifier 1. The color amplifier 1 is cut off during the scanning period responsive to the output of the color killer circuit when the phase locked loop type color synchronizing circuit is not locked so that a carried color signal is stopped. Therefore, it does not matter even if a voltage set by the gain adjusting variable resistor VR is changed as described above when the phase locked loop type color synchronizing circuit is not locked. In the case where the phase locked loop type color synchronizing circuit is locked, the transistor T67 is cut off, as is clear from the foregoing description and therefore the voltage set by the gain adjusting variable resistor VR is applied to the color amplifier 1 without being disturbed. Meanwhile, an advantage of utilizing the color again adjusting variable resistor VR for the pupose of controlling the switch 22 is that the terminal pin for withdrawing a control voltage from inside an integrated circuit for controlling the switch in the case where the circuit is implemented in an integrated circuit can be shared with an external connection pin for a color gain adjusting variable resistor, resulting in a decrease of the number of terminal pins by one. Referring to Fig. 15, the transistors T44, T45, and T67 and the resistor R52 and the pulse supply 40 form the extracting driving means 23 shown in Fig. 1.

As described in the foregoing, the present invention achieves assured control of switching mode of a PAL switch with a novel structure and is of much utility.

**Claims**

1. A color process circuit for processing a PAL color television signal including a subcarrier suppressed color signal wherein a subcarrier is quadrature modulated by two color component signals, one of the modulation axes being 180° reversed for every second line, and a burst signal the phase of which is swung in synchronism with the reversion of said one modulation axis, comprising:

demodulator means (6, 7, 8) for demodulating said PAL color television signal,

said demodulator means including an R—Y demodulator (8), a B—Y demodulator (6) and a G—Y demodulator (7);

PAL switch means (20) for switching the phase of said color signal or a subcarrier for each horizontal period for supplying the switched output to said demodulator means;

phase locked loop type color synchronizing circuit means (9, 10, 14),

said phase looked loop type color synchronizing circuit means including

voltage controlled oscillator means (9) responsive to a given control voltage for generation a subcarrier at the frequency associated with said given control voltage, the output of said voltage controlled oscillator (9) being supplied to said demodulator means (6, 7, 8) as said subcarrier, and

control voltage generating means (13) for comparing the phases of the subcarrier output of said voltage controlled oscillator means (9) and said color burst for supplying a control voltage to said voltage controlled oscillator means;

phase detecting means (17) for detecting the phase of the output of said PAL switch means;

said phase detecting means (17) including means for withdrawing a first state output when the phase of the output of said PAL switch means (18, 19, 20) is a normal phase, and

means for withdrawing a second state output when the phase of the output of said PAL switch means (18, 19, 20) is not a normal phase;

said phase locked loop type color synchronizing circuit means being adapted to be locked responsive to the output of said phase detecting means (17);

forcedly reversing means (15, 21, 22, 23) for forcedly reversing the switching operation of said PAL switch means (18, 19, 20) when said phase locked loop type color synchronizing circuit means is not in a locked state; and

forcedly changing means responsive to said second state output obtained from said phase detecting means (17) for forcedly changing the control voltage being applied to said voltage controlled oscillator means (9),

said forcedly reversing means being adapted to forcedly reverse the switching operation of said PAL switch, means (18, 19, 20) when the control voltage is forcedly changed by means of said forcedly changing means,

characterized in that said phase detecting means (17) comprises means responsive to the outputs of said R—Y demodulator (8) and said G—Y demodulator (7) for detecting the phase of the output of said PAL switch means, (18, 19, 20) and that

said forcedly changing means comprises sawtooth waveform voltage generating means for generating a sawtooth waveform voltage having a predetermined slope rise and a predetermined slope fall, and

means for supplying said sawtooth waveform voltage from said sawtooth waveform voltage generating means in superimposition to said voltage controlled oscillator means (9) as said control voltage.

2. A color process circuit in accordance with claim 1, wherein

said phase detecting means comprises comparator means for receiving the outputs of said R—Y demodulator and said G—Y demodulator,

integrating means for integrating the output of said comparator means, and

output means responsive to the output of said integrating means for withdrawing a first or second state output.

3. A color process circuit in accordance with claim 2, which further comprises

auxiliary circuit means for receiving the outputs of said R—Y demodulator and said G—Y demodulator in a relation reversed in terms of the level to that being supplied to said comparator means, and wherein

said integrating means is responsive to the output of said auxiliary circuit means to be controlled.

4. A color process circuit in accordance with claim 3, which further comprises

stop means responsive to said second state output from said output means for stopping the forced change of the control voltage by said forcedly changing means.

5. A color process circuit in accordance with claim 1 or 2, which further comprises

system selecting switch means responsive to reception of an NTSC color television signal or a PAL color television signal for making system selection, and

means responsive to system selection of an NTSC system by said system selecting switch means for supplying the output of said B—Y demodulator in place of the output of said G—Y demodulator.

6. A color process circuit in accordance with claim 1, which further comprises

trigger pulse providing means for providing trigger pulses in synchronism with horizontal synchronization,

sais PAL switch means making a switching operation of the phase of said color signal or subcarrier at each said trigger pulse, and

trigger pulse ineffective rendering means for rendering ineffective a supply of one or an odd number of trigger pulses to said PAL switch means when said second state output is obtained from said phase detecting means.

7. A color process circuit in accordance with claim 6, which further comprises

said forcedly changing means including

sawtooth waveform voltage generating means for generating a sawtooth waveform voltage having a predetermined slope rise and a predetermined slope fall, and

means for providing said sawtooth waveform voltage from said sawtooth waveform voltage generating means in superimposition to said voltage controlled oscillator means as said control voltage, and wherein

said trigger pulse ineffective rendering means is adapted to rendering effective one said trigger pulse during one cycle of said sawtooth waveform voltage.

8. A color process circuit in accordance with claim 7, wherein

said sawtooth waveform voltage generating means comprises

a capactitor,

charging path means including a switching element for charging said capacitor, and

discharging path means including a switching element for discharging said capacitor, and which further comprises

voltage change stopping means responsive to said first state output of said phase detecting means for forcing said switching elements of said charging path means and said discharging path means.

9. A color process circuit in accordance with claim 7, wherein

said trigger pulse ineffective rendering means comprises

a first transistor being operable responsive to said change stop means,

pulse supply means for supplying a pulse voltage,

switching means responsive to said pulse voltage for being turned off and for transferring said trigger pulse to said PAL switch means, and

a second transistor dependent on the state of said first transistor for rendering effective or ineffective said pulse voltage.

10. A color process circuit in accordance with claim 9, wherein

said switching means comprises

a third transistor coupled to said second transistor for being turned on/off, and

a switching device responsive to on or off of said third transistor for being turned off or on.

11. A color process circuit in accordance with claim 10, which further comprises

color amplifying means for amplifying said PAL color signal and responsive to said first state output of said phase detecting means for being disabled,

a line extending from said color amplifying means, and

means coupled to said line and for adjusting a gain of said color amplifier,

said third transistor and said switch device being coupled to said line, said third transistor being turned on or off and said line being brought to the high level or the low level, whereby said switching element is turned off.

12. A color process circuit in accordance with claim 7, wherein

said forcedly changing means comprises means for changing one of the rise and the fall of said sawtooth waveform voltage generating means in a stepwise manner, whereby said one of the rise and the fall of said sawtooth waveform voltage includes a voltage changing period and voltage constant period, and

said forcedly reversing means comprises means for reversing the switching operation of said PAL switch means during said voltage changing period.

13. A color process circuit in accordance with claim 7, wherein

said forcedly changing means comprises means for changing one of the rise and the fall of said sawtooth waveform voltage generating means in a stepwise manner, whereby said one of the rise and the fall of said sawtooth waveform voltage includes a voltage changing period and voltage constant period, and

said forcedly reversing means comprises means for reversing and switching operation of said PAL switch means during said voltage constant period.

**Patentansprüche**

1. Farbverarbeitungsschaltung für ein PAL-Farbfernsehsignal mit einem hilfsträgerunterdrückten Farbsignal, in welchem ein Hilfsträger quadraturmoduliert wird durch zwei Farbkomponentensignale, wobei eine der Modulationsachsen jede zweite Zeile um 180° umgekehrt wird, un einem Burst-Signal, dessen Phase synchron zur Umkehrung der einen Modulationsachse geschwenkt wird, mit:

Einer Demodulatoreinrichtung (6,7, 8) zum Demodulieren des PAL-Farbfernsehsignals, wobei die Demodulatoreinrichtung einen R—Y-Demodulator (8), einen B—Y-Demodulator (6) und einen G—Y-Demodulator (7) aufweist,

einer PAL-Schaltvorrichtung (20) zum Schalten der Phase des Farbsignals oder Hilfsträgers für jede horizontale Periode zum Zuführen des geschalteten Ausgangs zur Demodulatoreinrichtung, einem phasenstarren Farbsynchronschaltkreis (9, 10, 14) wobei der phasenstarre Farbsynchronschaltkreis aufweist eine spannungsgesteuerte Oszillatorvorrichtung (9), die abhängig ist von einer vorgegebenen Steurerspannung, zur Erzeugung eines Hilfsträgers und der zur vorgegebenen Steuerspannung gehörenden Frequenz, wobei das Ausgangssignal des spannungsgesteuerten Oszillators (9) der Demodulatorvorrichtung (6, 7, 8) als Hilfsträger zurgeführt wird, und eine Steuerspannungserzeugungsvorrichtung (13) zum Vergleichen der Phasen des Hilfsträgerausgangs der spannungsgesteuerten Oszillatorvorrichtung (9) und des Farbbursts zum Zuführen eine Steuerspannung zur spannungsgesteuerten Oszillatorvorrichtung, eine Phasendetektorvorrichtung (17) zum Detektieren der Phase des Ausgangs der PAL-Schaltvorrichtung, wobei die Phasendetektorvorrichtung (17) aufweist

eine Vorrichtung zum Abziehen eines ersten Zustandsausgangssignals, wenn die Phase des Ausgangs der PAL-Schaltvorrichtung (18, 19, 20) eine normale Phase ist, und

eine Vorrichtung zum Abzeihen eines zweiten Zustandsausgangssignals, wenn die Phase des Ausgangs der PAL-Schaltvorrichtung (18, 19, 20) keine normale Phase ist, wobei der phasenstarre Farbsynchronschaltkreis in Abhängigkeit vom Ausgangssignal der Phasendetektorvorrichtung (17) verriegelbar ist,

eine Umkehrvorrichtung (15, 21, 22, 23) zum zwangsweisen Umkehren des Schaltbetriebes der PAL-Schaltvorrichtung (18, 19, 20), wenn der phasenstarre Farbsynchronschaltkreis nicht in verrriegeltem Zustand ist und

eine Änderungsvorrichtung, die abhängig ist vom zweiten Zustandsausgangssignal der Phasendetektorvorrichtung (17), zum zwangsweisen Ändern der Steuerspannung, die der phasengesteuerten Oszillatorvorrichtung (9) zugefuhrt wird,

wobei die Umkehrvorrichtung den Schaltbetrieb der PAL-Schaltvorrichtung (18, 19, 20) zwangsweise umkehrt, wenn die Steuerspannung zwangsweise durch die Änderungsvorrichtung geändert wird,

dadurch gekennzeichnet, daß die Phasendetektorvorrichtung (17) eine Vorrichtung aufweist, die abhängig ist vom Ausgangssignal des R—Y-Demodulators (8) und des G—Y-Demodulators (7), zum Detektieren der Phase des Ausgangssignals der PAL-Schaltvorrichtung und daß die Änderungsvorrichtung aufweist

eine Sägezahnspannungserzeugungsvorrichtung zum Erzeugen einer Sägezahnspannung mit einem vorbestimmten Anstieg und einem vorbestimmten Abfall, und eine Vorrichtung zum Zuführen der Sägezahnspannung von der Sägezahnspannungserzeugungsvorrichtung in Überlagerung zur spannungsgesteuerten Oszillatorvorrichtung (9) als Steursignal.

2. Farbverarbeitungsschaltung nach Anspruch 1, dadurch gekennzeichnet, daß die Phasendetektorvorrichtung aufweist einen Komparator zum Empfangen der Ausgangssignale des R—Y-Demodulators und des G—Y-Demodulators, eine Integrationsvorrichtung zum Integrieren des Ausgangssignals des Komparators und eine Ausgangsvorrichtung, die abhängig ist vom Ausgangsignal der Integrationsvorrrichtung

zum Abziehen eines ersten oder zweiten Zustandsausgangssignals.

3. Farbverarbeitungsschaltung nach Anspruch 2, dadurch gekennzeichnet, daß sie ferner aufweist

eine Hilfsschaltkreisvorrichtung zum Empfangen der Ausgangssignale des R—Y-Demodultors und des G—Y-Demodulators in umgekehrtem Verhältnis zu dem Pegel, der dem Komparator zugeführt wird, und wobei die Integrationsschaltung abhängig ist vom Ausgangssignal der Hilfsschaltkreisvorrichtung, um gesteuert zu werden.

4. Farbsignalverarbeitungsvorrichtung nach Anspruch 3, dadurch gekennzeichnet, daß sie ferner aufweist

eine Stopvorrichtung, die abhängig ist vom zweiten Zustandsausgangssignal der Ausgangsvorrichtung, zum Stoppen der zwangsweisen Änderung der Steuerspannung durch die Änderungsvorrichtung.

5. Farbverarbeitungsschaltung nach den Ansprüchen 1 oder 2, dadurch gekennzeichnet, daß sie ferner aufweist eine Systemwahlschaltvorrichtung, die abhängig ist vom Empfang eines NTSC-Farbfernsehsignals oder eines PAL-Farbfernsehsignals für eine Systemauswahl und eine Vorrichtung, die abhgängig ist von der Wahl des NTSC-Systems durch die Systemwahlschaltvorrichtung zum Zuführen des Ausgangssignals des B—Y-Demodulators anstelle des Ausgangssignals des G—Y-Demodulators.

6. Farbverarbeitungsschaltung nach Anspruch 1, dadurch gekennzeichnet, daß sie ferner aufweist

eine Triggerpulszuführvorrichtung zum Zuführen eines Triggerimpulses synchron zur Horizontalsynchronisation,

wobei die PAL-Schaltvorrichtung einen Schaltvorgang den Phase des Farbsignals oder des Hilfsträgers bei jedem Triggerpuls durchführt und eine Triggerpuls-Deaktiviervorrichtung zum Deaktivieren der Zufuhr eine Triggerpulses oder einer ungeraden Anzahl von Triggerpulsen zur PAL-Schaltvorrichtung, wenn das zweite Zustandsausgangssignal von der Phasendetektorvorrichtung erhalten wird.

7. Farbverarbeitungsschaltung nach Anspruch 6, dadurch gekennzeichnet, daß die Änderungsvorrichtung aufweist

eine Sägezahnspannungserzeugungsvorrichtung zum Erzeugen einer Sägezahnspannung mit einem vorbestimmten Anstieg und einem vorbestimmten Abfall und eine Vorrichtung zum Zuführen der Sägezahnspannung von der Sägezahnspannungserzeugungsvorrichtung in Überlagerung zur spannungsgesteuerten Oszillatorvorrichtung als Steuerspannung und daß die Triggerpuls-Deaktivierungsvorrichtung einen Triggerpuls während eines Zyklus der Sägezahnspannung aktiviert.

8. Farbverarbeitungsschaltung nach Anspruch 7, dadurch gekennzeichnet, daß die Sägezahnspannungserzeugungsvorrichtung aufweist einen Kondensator,

einen Ladeweg mit einem Schaltelement zum Laden des Kondensators und

eine Entladewegvorrichtung mit einem Schaltelement zum Entladen des Kondensators,

und daß sie ferner aufweist

eine Spannungsänderungsstopvorrichtung, die abhängig ist vom ersten Zustandsausgangssignal der Phasendetektorvorrichtung zum zwangsweisen Betätigen der Schaltelemente des Ladeweges und des Entladeweges.

9. Farbverarbeitungsschaltung nach Anspruch 7, dadurch gekennzeichnet, daß die Triggerpulsdeaktiviervorrichtung aufweist einen ersten Transistor, der abhängig von der Änderungsstopvorrichtung betreibbar ist,

eine Impulszuführvorrichtung zum Zuführen einer Impulsspannung,

eine Schaltvorrichtung, die abhängig von der Impulsspannung ausgeschaltet wird und die Triggerpulse zur PAL-Schaltvorrichtung überträgt, und

einen zweiten Transistor, der abhängig ist vom Zustand des ersten Transistors und die Impulsspannung effektiv oder ineffektiv macht.

10. Farbverarbeitungsschaltung nach Anspruch 9, dadurch gekennzeichnet, daß die Schaltvorrichtung aufweist

eine dritten Transistor, der mit dem zweiten Transistor verbunden ist und an/ausgeschaltet wird, und eine Schaltvorrichtung, die abhängig vom An- oder Auszustand des dritten Transistors aus- oder angeschaltet wird.

11. Farbverarbeitungsschaltung nach Anspruch 10, dadurch gekennzeichnet, daß sie ferner aufweist

eine Farbverarbeitungsvorrichtung zum Verstärken des PAL-Farbsignals, welche in Anhängigkeit vom ersten Zustandsausgangssignal der Phasendetektorvorrichtung deaktiviert wird,

eine Leitung, die sich von der Farbverstärkervorrichtung aus erstreckt, und eine Vorrichtung, die mit der Leitung verbungen ist, zum Einstellen der Verstärkung des Farbverstärkers,

wobei der dritte Transistor und die Schaltvorrichtung mit der Leitung verbunden sind, der dritte Transistor an- oder ausgeschaltet wird und die Leitung auf hohen Pegel oder niedrigen Pegel gebracht wird, wodurch das Schaltelement ausgeschaltet wird.

12. Farbverarbeitungsschaltung nach Anspruch 7, dadurch gekennzeichnet, daß die Änderungsvorrichtung eine Vorrichtung aufweist zum Ändern entweder des Anstiegs oder des Abfalls der Sägezahnspannungserzeugungsvorrichtung in stufenweiser Art, wobei entweder der Anstieg oder der Anbfall oder Sägezahnspannung eine Spannungsänderungsperiode und eine Spannungshalteperiode aufweist und daß die Umkehvorrichtung eine Vorrichtung aufweist zum Umkehren des Schaltbetriebes der PAL-Schaltvorrichtung während der Spannungsänderungsperiode.

13. Farbverarbeitungsschaltung nach Anspruch 7, dadurch gekennzeichnet, daß die Änderungsvorrichtung eine Vorrichtung aufweist zum Ändern entweder des Anstiegs oder des Abfalls der Sägezahnspannungserzeugungsvorrichtung in stufenweiser Art, wobei der Anstieg oder der Abfall der Sägezahnspannung eine Spannungsänderungsperiode und eine Spannungshalteperiode aufweist, und daß die Umkehrvorrichtung eine Vorrichtung aufweist zum Umkehren des Schaltbetriebes der PAL-Schaltvorrichtung während der Spannungshalteperiode.

**Revendications**

1. Circuit de traitment de couleur pour le traitement d'un signal de télévision en couleur PAL comprenant un signal de couleur à suppression de sousporteuse, dans lequel une sous-porteuse est modulée en quadrature par deux signaux de composante de couleur, un premier des axes de modulation étant inversé à 180°C toutes les deux lignes, et un signal d'impulsion dont la phase ojschille en synchronisme avec l'inversion dudit premier axe de modulation, comprenant:

des moyens de démodulation (6, 7, 8) pour démoduler ledit signal de télévision en couleur PAL,

lesdits moyens de démodulation comprenant un démodulateur R—Y (8), un démodulateur B—Y (6) et un démodulateur V—Y (7);

des moyens de commutation PAL (20) pour commuter la phase dudit signal de couleur ou d'une sousporteuse pour chaque période horizontale, afin de fournir la sortie commutée auxdits moyens de démodulation;

un circuit de synchronisation de couleur du type à boucle à blocage de phase (9, 10, 14),

ledit circuit de synchronisation de couleur du type à boucle à blocage de phase comprenant:

un oscillateur à commande de tension (9) qui répond à une tension de commande donnée pour générer une sous-porteuse à la fréquence associée à ladite tension de commande donnée, la sortie dudit oscillateur à commande de tension (9) étant fournie auxdits moyens de démodulation (6, 7, 8) comme dite sous-porteuse, et

des moyens de génération de tension de commande (13) pour comparer les phases de la sortie de sous-porteuse dudit oscillateur à commande de tension (9) et de ladite impulsion de couleur de manière à fournir une tension de commande audit oscillateur à commande de tension;

des moyens de détection de phase (17) pour détecter la phase de la sortie desdits moyens de commutation PAL;

lesdits moyens de détection de phase (17) comprenant des moyens pour extraire une sortie à un premier état lorsque la phase de la sortie desdits moyens de commutation PAL (18, 19, 20) est une phase normale, et

des moyens pour extraire une sortie à un deuxième état lorsque la phase de la sortie desdits moyens de commutation PAL (18, 19, 20) n'est pas une phase normale;

ledit circuit de synchronisation de couleur du type à boucle à blocage de phase étant prévu pour être verrouillé en réponse à la sortie des dits moyens de détection de phase (17);

des moyens d'inversion forcée (15, 21, 22, 23) pour effectuer l'inversion forcée de l'opération de commutation des dits moyens de commutation PAL (18, 19, 20) lorsque ledit circuit de synchronisation de couleur du type à boucle à blocage de phase n'est pas dans un état verrouillé; et

des moyens de changement forcé qui répondent à ladite sortie à un deuxième état, fournie par lesdits moyens de détection de phase (17), de manière à effectuer le changement forcé de la tension de commande appliquée audit oscillateur à commande de tension (9),

lesdits moyens d'inversion forcée étant prévus pour effectuer l'inversion forcée de l'opération de commutation desdits moyens de commutation PAL (18, 19, 20) lorsque la tension de commande est changée de force par lesdits moyens de changement forcé, caractérisé en ce que lesdits moyens de détection de phase (17) comprennent des moyens qui répondent aux sorties dudit démodulateur R—Y (8) et dudit démodulateur V—Y (7) pour détecter la phase de la sortie desdits moyens de commutation PAL (18, 19, 20), et en ce que

lesdits moyens de changement forcé comprennent des moyens de génération de tension à forme d'onde en dents de scie pour générer une tension à forme d'onde en dents de scie ayant une montée de pente prédéterminée et une retombée de pente prédéterminée, et

des moyens pour fournir ladite tension à forme d'onde en dents de scie, venant desdits moyens de génération de tension à forme d'onde en dents de scie, en superposition audit oscillateur à commande de tension (9), comme dite tension de commande.

2. Circuit de commande de traitement de couleur suivant la revendication 1, dans lequel

lesdits moyens de détection de phase comprennent

des moyens de comparaison pour recevoir les sorties dudit démodulateur R—Y et dudit démodulateur V—Y;

des moyens d'intégration pour intégrer la sortie des moyens de comparaison, et

des moyens de sortie qui répondent à la sortie des moyens d'intégration pour extraire une sortie à un premier ou un deuxième état.

3. Circuit de traitement de couleur suivant la revendication 2, qui comprend en outre

un circuit auxiliaire pour recevoir les sorties dudit démodulateur R—Y et dudit démodulateur V—Y dans une relation inverse, en termes du niveau, de celle qui est fournie auxdits moyens de comparaison, et dans lequel

lesdits moyens d'intégration répondent à la sortie dudit circuit auxiliaire à commander.

4. Circuit de traitement de couleur suivant la revendication 3, qui comprend en outre

des moyens d'arrêt qui répondent à ladite sortie à un deuxième état desdits moyens de sortie pour arrêter le changement forcé de la tension de commande par lesdits moyens de changement forcé.

5. Circuit de traitement de couleur suivant la revendication 1 ou 2, qui comprend en outre

des moyens de commutation de sélection de système qui répondent à la réception d'un signal de télévision en couleur NTSC ou d'un signal de télévision en couleur PAL pour effectuer une sélection de système, et

des moyens qui répondent à la sélection de système d'un système NTSC par lesdits moyens de commutation de sélection de système pour fournir la sortie dudit démodulateur B—Y à la place de la sortie dudit démodulateur V—Y.

6. Circuit de traitement de couleur suivant la revendication 1, qui comprend en outre

des moyens de fourniture d'impulsion de déclenchement pour fournir des impulsions de déclenchement en synchronisme avec la synchronisation horizontale,

lesdits moyens de commutation PAL effectuant une opération de commutation de la phase dudit signal de couleur ou de la sous-porteuse à chaque dite impulsion de déclenchement, et

des moyens rendant sans effet l'impulsion de déclenchement, pour rendre sans effet la fourniture d'une impulsion ou d'un nombre impair d'impulsions de déclenchement auxdits moyens de commutation PAL lorsque ladite sortie à un deuxième état est fournie par lesdits moyens de détection de phase.

7. Circuit de traitement de couleur suivant la revendication 6, qui comprend en outre

lesdits moyens de changement forcé comportant

des moyens de génération de tension à forme d'onde en dents de scie pour générer une tension à forme d'onde en dents de scie ayant une montée de pente prédéterminée et une retombée de pente prédéterminée, et des moyens pour fournir ladite tension à forme d'onde en dents de scie, provenant desdits moyens de génération de tension à forme d'onde en dents de scie, en superposition audit oscillateur à commande de tension comme dite tension de commande, et dans lequel

lesdits moyens rendant sans effet l'impulsion de déclenchment sont prévus pour rendre efficace une dite impulsion de déclenchement pendant un cycle de ladite tension à forme d'onde en dents de scie.

8. Circuit de traitement de couleur suivant la revendication 7, dans lequel

lesdits moyens de génération de tension à forme d'onde en dents de scie comprennent

un condensateur,

des moyens de chemin de charge commmportant un élément de commutation pour charger ledit condensateur, et

des moyens de chemin de décharge comportant un élément de commutation pour décharger ledit condensateur, et qui comprennent en outre

des moyens d'arrêt du changement de tension qui répondent à ladite sortie à un premier état desdits moyens de détection de phase pour forcer lesdits éléments de commutation desdits moyens de chemin de charge et desdits moyens de chemin de décharge.

9. Circuit de traitement de couleur suivant la revendication 8, dans lequel

lesdits moyens rendant sans effet l'impulsion de déclenchement comprennent

un premier transistor qui est activé en réponse auxdits moyens d'arrêt du changement,

des moyens de fourniture d'impulsion, pour fournir une tension d'impulsion,

des moyens de commutation qui répondent à ladite tension d'impulsion pour devenir non conducteurs et pour transférer ladite impulsion de déclenchement auxdits moyens de commutation PAL, et

un deuxième transistor dépendant de l'état dudit premier transistor pour rendre efficace ou sans effet ladite tension d'impulsion.

10. Circuit de traitement de couleur suivant la revendication 9, dans lequel

lesdits moyens de commutation comprennent

un troisième transistor couplé audit deuxième transistor pour devenir conducteur/non conducteur, et

un dispositif de commutation qui répond à la mise en conduction ou en non conduction dudit troisième transistor, pour devenir non conducteur ou conducteur.

11. Circuit de traitement de couleur suivant la revendication 10, qui comprend en outre des moyens d'amplification de couleur pour amplifier ledit signal de couleur PAL et qui répondent à ladite sortie à un premier état desdits moyens de détection de phase de manière à être désactivés,

une ligne partant desdits moyens d'amplification de couleur, et

des moyens raccordés à ladite ligne pour adjus-ter un gain dudit amplifiateur de couleur,

ledit troisième transistor et ledit dispositif de commutation étant reliés à ladite ligne, ledit troisième transistor devenant conducteur ou non conducteur et ladite ligne étant mise au niveau haut ou au niveau bas, de sorte que ledit élément de commutation est rendu non conducteur.

12. Circuit de traitement de couleur suivant la revendication 7, dans lequel

lesdits moyens de changement forcé comprennent des moyens pour changer l'une de la montée et de la retombée desdits moyens de génération de tension à forme d'onde en dents de scie par paliers, de sorte que ladite une de la montée et de la retombée de ladite tension à forme d'onde en dents de scie comprend une période de changement de tension et une période de tension constante, et

lesdits moyens d'inversion forcée comprennent des moyens pour inverser l'opération de commutation desdits moyens de commutation PAL pendant ladite période de changement de tension.

13. Circuit de traitement de couleur suivant la revendication 7, dans lequel

lesdits moyens de changement forcé comprennent des moyens pour changer l'une de la montée et de la retombée desdits moyens de génération de tension à forme d'onde en dents de scie par paliers, de sorte que ladite une de la montée et de la retombée de ladite tension à forme d'onde en dents de scie comprend une période de changement de tension et une période de tension constante, et

lesdits moyens d'inversion forcée comprennent des moyens pour inverser l'opération de commutation desdits moyens de commutation PAL pendant ladite période de tension constante.

FIG. 1

COMPOSITE
COLOR SIG.

EP 0 047 995 B2

FIG.2

FIG.3

FIG. 4

3

FIG.5

FIG. 6

(A)

(B)

(C)

4

FIG.7

FIG.8

4.433618MHz

FIG.9

FIG.10

FIG.11

(A)

X1    X2    E

(B)

FIG.12

Z3
E
B
S

FIG.13

FIG.14

Z4    Z5    Z6    E

S

T

FIG.15

EP 0 047 995 B2

FIG.16

FIG.17

FIG.18

(A)

(B)

FIG.19

(A)

(B)

(C)

(D)